# EUROPÄISCHE PATENTANMELDUNG

(11) **EP 0 726 480 A2**
(43) Veröffentlichungstag der Anmeldung: **14.08.1996**
(21) Anmeldenummer: 96102004.7
(22) Anmeldetag: 12.02.1996
(51) Int. Cl.: G02B 21/00

(54) **Sonde für ein optisches Nahfeldmikroskop**

(30) Priorität: 13.02.1995 DE 19504662
(71) Anmelder: Heckl, Wolfgang M., Prof. Dr., 80939 München (DE)
(72) Erfinder: Heckl, Wolfgang M., Prof. Dr., 80939 München (DE)
(74) Vertreter: von Füner, Alexander, Dr.

(57) **Zusammenfassung**

Sonde für ein optisches Nahfeldmikroskop, das aus einem einstückigen Halbleiterelement besteht, das ein sich verjüngendes, poröses Ende aufweist, das durch elektromagnetische Strahlung oder durch elektrische Felder zur Aussendung elektromagnetischer Strahlung veranlaßt werden kann.

## Beschreibung

Die Erfindung bezieht sich auf den Bereich der Rastersondenmikroskopie. Die Erfindung betrifft eine Sonde für ein optisches Nahfeldmikroskop, die in jedem Gerät Anwendung finden kann, in dem es darauf ankommt, Licht von einer sehr begrenzten Stelle, insbesondere auch kleiner als die verwendete Lichtwellenlänge, austreten zu lassen.

Eine ideale Nahfeldlichtquelle, wie sie auch in dem ersten kommerziell vertriebenen optischen Nahfeldmikroskop der Fa. Topometrox Darmstadt, Modell Aurora, vertrieben wird, hat eine möglichst hohe Intensität und einen möglichst kleinen Durchmesser (Apertur). Damit stellt sich die Frage, welche Lichtintensität bzw. welche Wärmebelastung ein Material aushalten kann. Bei den bekannten technischen Lösungen wird in eine Glasfaser Licht mit einer Leistung in der Größenordnung von ungefähr 1 mW oben eingekoppelt und strahlt dann unten aus der mit einer kleinen Öffnung versehenen Spitze aus. Aufgrund der Lichtpropagation in der Faser und beim Auskoppeln entsteht eine erhebliche Dämpfung, die insbesondere von der Größe der Blende (Apertur) abhängt. Diese Blende wird herkömmlich durch Aufdampfen einer Metallschicht auf eine ungefähr 100 nm spitze, ausgezogene Glasfaser unter Freilassen einer kleinen Öffnung hergestellt. Die an der Blende ausgekoppelte Leistung beträgt bei einem normalen Dämpfungswert von ungefähr 10⁶ nur ungefähr 1 nW. Die Leistung wird durch die Aufwärmung und thermische Zerstörung des Blendenmaterials, wobei meist Aluminium als Aufdampfschicht verwendet wird, bestimmt.

Bekannt ist aus US-5 105 305 ein optisches Nahfeldmikroskop, das als Sonde eine Pipette oder optische Faser aufweist, an deren Spitze sich ein fluoreszierendes Material, z.B. aus Cadmiumsulfid, Cer-, Terbium-, Europiumsalzen, einer elektrolumineszierenden Lichtquelle oder Latex, der mit einem Fluoreszenzfarbstoff imprägniert ist, befindet.

Kuck, N., Lieberman, K., Lewis A. & Vecht A. beschreiben in Appl. Phys. Lett. 61, 139-141 (1992), eine Lichtquellenapparatur auf der Basis einer Pipette, in die ZnS:MnCu gefüllt ist.

Nachteilig ist die geringe Lichtausbeute der bekannten Sonden aufgrund des "throughput" der Lichtmenge, die am oberen Ende in die Sonden eingekoppelt und in einer sich verjüngenden Glaskapillare zur unteren Austrittsöffnung geleitet werden muß. Ein weiterer Nachteil ist die komplizierte Herstellung der Glaskapillaren (Pipettenpuller). Bei diesen Sonden ist die geringe Lebensdauer des Fluoreszenzfarbstoffs, die geringe Lichtausbeute und die technisch nicht gut beherrschte Züchtung von räumlich eng begrenzten Farbstoffkristallen in Kapillaren nachteilig.

Der Erfindung lag die Aufgabe zugrunde, effiziente, d.h. robuste und mit langer Lebensdauer versehene, Sonden bereitzustellen.

Die Aufgabe wurde wie aus dem Anspruch 1 ersichtlich gelöst.

Gegenstand der Erfindung ist eine Sonde für ein optisches Nahfeldmikroskop bestehend aus einem einstückigen Halbleiterelement, das ein sich verjüngendes, poröses Ende aufweist, das durch elektromagnetische Strahlung oder durch elektrische Felder zur Aussendung elektromagnetischer Strahlung veranlaßt werden kann.

Ein Vorteil der erfindungsgemäßen Sonde besteht darin, daß deren Herstellung einfach ist und eine große Anzahl von Sonden gleichzeitig in einem parallelisierbaren Verfahren hergestellt werden kann. Die Herstellung ist billig und mit einem geringen Zeitaufwand verbunden. Diese Möglichkeit besteht bei dem bekannten Verfahren mit seinem langwierigen Einzelziehverfahren von Fasern und der anschließenden Rotationsbedampfung im Hochvakuum nicht.

Vorteilhafte Ausgestaltungen der erfindungsgemäßen Sonde sind Gegenstand der Ansprüche 2 bis 4.

Die erfindungsgemäße Sonde wird in der Weise hergestellt, daß das sich verjüngende Ende eines Halbleiterelements durch Ätzen porös gemacht wird, so daß es eine ultrakleine Lichtspitze darstellt. In gleicher Weise kann die Sonde auch umgekehrt, d.h. im Lichtsammelmodus, ganz allgemein elektromagnetische Strahlung, die z.B. auch Plasmonen einschließt, benutzt werden.

Anhand von Zeichnungen werden Ausführungsbeispiele der Erfindung näher erläutert. Es zeigt:
Fig. 1 eine Anwendung einer leuchtenden subwellenlängen großen Punktlichtquelle als nahfeldoptische Sonde 1 im Rastersondenmikroskop in Durchlichtbetrieb.
Fig. 2 eine Anwendung einer erfindungsgemäßen Sonde als Cantileverfeder zur Kraftdetektion im Rasterkraftmikroskop.
Fig. 3 den Aufbau für ein selbstterminierendes Ätzverfahren, mit dessen Hilfe poröses Silicium hergestellt und die Geometrie des leuchtfähigen Körpers erzeugt werden kann.

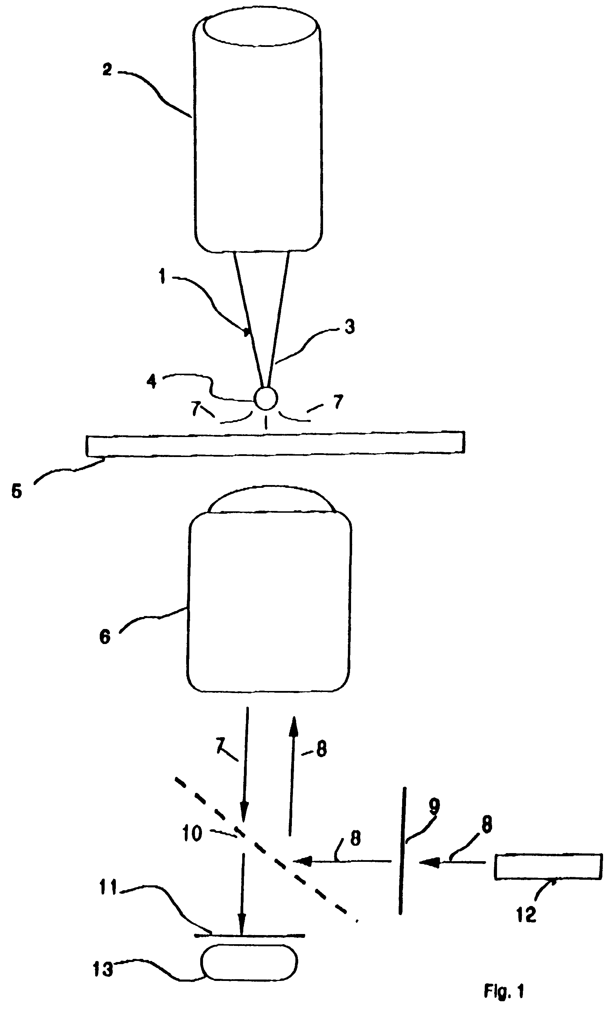

Das in Fig. 1 für den Durchlichtbetrieb dargestellte optische System enthält eine Lichtquelle 12, eine Sonde 1 und einen Piezoscanner 2 zur dreidimensionalen Bewegung der Sonde relativ zu einer Probe 5. Die Sonde 1 besteht aus einem Element 3 aus einem Halbleiter, z.B. Silicium, dessen leuchtfähiges Ende 4 durch die aus der Lichtquelle 12 stammende Anregungsstrahlung 8 zur Emission von Strahlung 7 angeregt wird. Wie in Fig. 1 dargestellt wird die Anregungsstrahlung 8 aus der Lichtquelle 12 über einen Erregerfilter 9, einen dichroitischen Farbteilerspiegel 10 und ein Objektiv 6 auf das leuchtfähige Ende 4 gerichtet. Die daraufhin vom leuchtfähigen Ende 4 emittierte Fluoreszenzstrahlung 7 kann dann mit der zu untersuchenden Probe 5 wechselwirken und damit Informationen über diesen auf einer sehr kleinen räumlichen Skala gewinnen. Nach der Wechselwirkung mit der Probe wird die Strahlung 7 in einem Objektiv 6 gesammelt und anschließend über einen dichroitischen Farbteilerspiegel 10 und einen selektiven Sperrfilter 11 auf einen Detektor 13, z.B. einen Photomultiplier, ein Okular oder ein Auge, gerichtet. Insbesondere ist das Prinzip des Rasterns der Sonde, mit Hilfe eines Piezoscanners, über die Probe mit anschließender Aufnahme des Lichtes, das mit der Probe wechselgewirkt hat, auch z.B. über eine Sammellinse in Auflicht oder in Wellenleitergeometrie durchführbar.

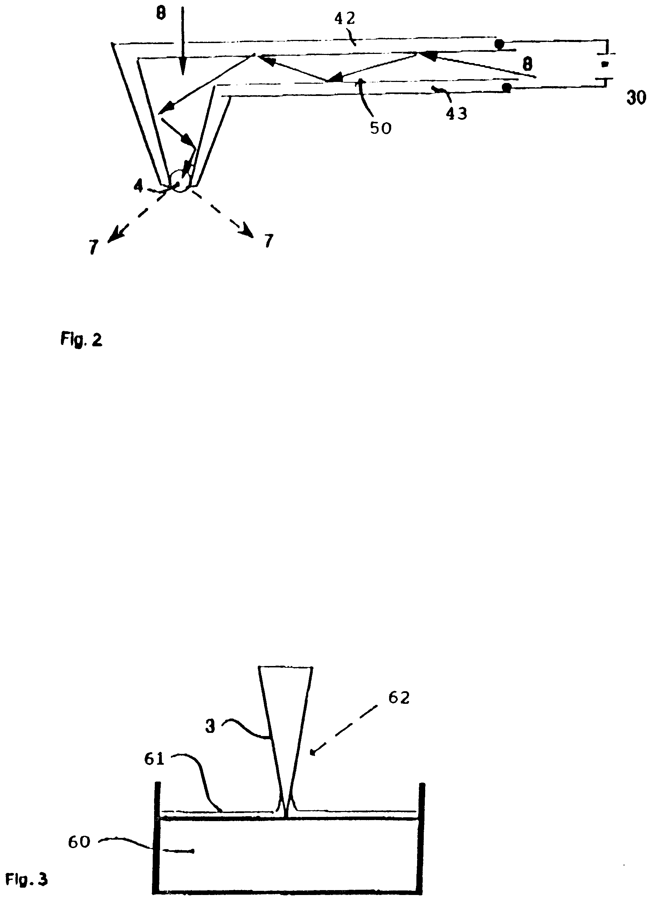

Fig. 2 zeigt eine Ausführungsform der erfindungsgemäßen Sonde bestehend aus einem leuchtfähigen Ende 4, z.B. aus Silicium, und einem Cantilever, d.h. einem Biegebalken mit geringer Steifigkeit im Bereich 1 N/m, einer Länge von ungefähr 100µ, einer Breite von ungefähr 10µ und einer Dicke von 5µ, der in an sich bekannter Weise mittels mikrolithographischer Techniken hergestellt wird. Der Cantilever 50 kann z.B. aus dotiertem oder undotiertem Silicium oder Siliciumnitrid bestehen. Bevorzugt wird das leuchtfähige Ende 4 naßchemisch oder mittels Plasma- oder Ionenätzen hergestellt. Das leuchtfähige Ende 4 kann innerhalb eines räumlich sehr eng begrenzten Bereiches, insbesondere auch kleiner als die verwendete Wellenlänge und somit dem Konzept der Nahfeldmikroskopie Rechnung tragend, elektromagnetische Strahlung aussenden, wenn ein elektrisches Feld 30 angelegt wird (Elektrolumineszenz), wobei die Kontaktierung mit Hilfe zweier seitlich angebrachter Kontaktelektroden 42 und 43 erfolgt.

Gemäß dieser Ausführungsform kann die erfindungsgemäße Sonde zugleich als kraftmikroskopische Abtastnadel in einem Rasterkraftmikroskop und als nahfeldoptische Sonde, gleichzeitig oder nacheinander bei der Messung von Proben, eingesetzt werden. Allgemein kann die Abstandskontrolle zwischen leuchtfähigem Ende und Probe sowohl über die Regulierung der Lichtmenge am Detektor, siehe Fig. 1, als auch über die Messung der Dämpfung der mit Hilfe eines Piezoschwingers angeregten Schwingung der gesamten Sonde bei zu enger Annäherung an die Probe geschehen. Alternativ kann die Abstandskontrolle über die Regulierung des elektrischen Stroms, insbesondere des Tunnelstroms, zwischen leuchtfähigem Körper und leitfähiger Probe geschehen. Bei der Ausführungsform gemäß Fig. 2 kann die Abstandskontrolle wie in einem Kraftmikroskop üblich geschehen, d.h. durch Messung der Verbiegung des Balkens bei Annäherung an die Probe, durch Messung der Größe des Tunnelstroms im Falle der Verwendung einer leitfähigen Probe, oder durch die Lichtmenge am Detektor. Die in Fig. 2 gezeigte Ausführungsform bietet die Möglichkeit, mit ein und derselben Sonde verschiedene Betriebsarten eines Rastersondenmikroskops, d.h. nahfeldoptisches Mikroskop mit optischer Abtastung der Probe, Kraftmikroskop mit Abtastung der Cantileververbiegung und Tunnelmikroskop mit Abtastung des Stroms zwischen leuchtfähigem Körper und Probe, zu erfüllen.

Fig. 3 zeigt ein Verfahren zur Herstellung einer erfindungsgemäßen Sonde durch direktes Ätzen eines Elements 3 aus Silicium unter Lichteinstrahlung 62. Als Ausgangsmaterial dient bei diesem Verfahren ein Siliciumstäbchen oder eine Cantileverspitze und nicht eine herkömmlich erhältliche Si-Waferscheibe. Dieses Siliciumstäbchen wird dann direkt kontaktiert, in ein Ätzbad 60 gehalten und dann vom Strom durchflossen. Dabei wird es geätzt. Dieser Ätzvorgang ist selbstterminierend, sobald soviel Material abgeätzt ist, daß das Siliciumstäbchen aus der Ätzlösung herausragt. Das Detergens 61 dient dazu, die Oberflächenspannung soweit zu verringern, daß die Kapillarkräfte nicht zuviel benetzen und die Spitze nur an der vordersten Stelle wirklich geätzt ist, und damit zu porösem Silicium wird.

Als Material für das Halbleiterelement können verwendet werden:
- Alle Halbleiter, insbesondere Silicium, Germanium, GaAs, SiC, Al₂O₃ oder ein Halbleiter aus der quaternären Gruppe oder der Gruppe der III-V-Halbleiter, die durch Ätzen (siehe W. Lang, P. Steiner, F. Kozlowski, Physik in unserer Zeit, 1993, 63) oder ein anderes geeignetes chemisches oder physikalisches Verfahren so porös gemacht werden können, daß in ihnen der Effekt des "quantum confinement" (Quantisierung der Energieniveaus der Elektronen) auftritt und eine direkte Bandlücke entsteht, so daß Emission von Licht erfolgt, dessen Wellenlänge die Bereiche der Röntgen-, UV-Strahlung und des sichtbaren bis infraroten Lichts umfaßt. Der Effekt des "quantum confinement" tritt auf, wenn Strukturen in Ausdehnung und Größe so klein ("quantum size") werden, daß die auftretenden, neuen Effekte nicht mehr durch die klassische Physik, sondern durch die Quantenmechanik beschrieben werden.

Die Größe des leuchtfähigen Endes kann beliebig, bis zu Nanometer-Größe, klein gewählt werden.

## Patentansprüche

1. Sonde für ein optisches Nahfeldmikroskop bestehend aus einem einstückigen Halbleiterelement, das ein sich verjüngendes, poröses Ende aufweist, das durch elektromagnetische Strahlung oder durch elektrische Felder zur Aussendung elektromagnetischer Strahlung veranlaßt werden kann.

2. Sonde nach Anspruch 1, dadurch gekennzeichnet, daß das Halbleiterelement an dem sich verjüngenden Ende eine Bandlücke besitzt, die es ermöglicht, daß das sich verjüngende Ende zum Leuchten angeregt werden kann.

3. Sonde nach Anspruch 2, dadurch gekennzeichnet, daß das Material für das Halbleiterelement ausgewählt ist aus der Gruppe Silicium, Germanium, GaAs, SiC, und Al₂O₃, oder aus der quaternären Gruppe oder aus der Gruppe der III-V-Halbleiter.

4. Sonde nach Anspruch 3, dadurch gekennzeichnet, daß das Material für das Halbleiterelement Silicium ist.
